# EUROPEAN PATENT APPLICATION

(11) **EP 4 687 205 A1**
(43) Date of publication of application: **04.02.2026**
(21) Application number: 25179362.6
(22) Date of filing: 28.05.2025
(51) Int. Cl.: H01M 50/211, H01M 50/516, H01M 50/507, H01M 10/48, H01M 50/209, H01M 50/503, H01M 50/569

(54) **BATTERY MODULE AND METHOD OF MANUFACTURING THE SAME**

(30) Priority: 30.07.2024 KR 20240101019
(71) Applicant: SK On Co., Ltd., Seoul 03161 (KR)
(72) Inventor: JEONG, Ju Young, 34124 Daejeon (KR); KIM, Ji Hun, 34124 Daejeon (KR); KIM, Jin Kwan, 34124 Daejeon (KR); YOON, Sang Won, 34124 Daejeon (KR); LEE, Kyung Min, 34124 Daejeon (KR)
(74) Representative: Prüfer & Partner mbB Patentanwälte · Rechtsanwälte

(57) **Abstract**

A battery module includes a cell assembly including a first battery cell that includes a first electrode lead and a second battery cell that includes a second electrode lead, a busbar assembly including a support plate including a plurality of through-holes, and a busbar electrically connected to the first electrode lead and the second electrode lead, the first electrode lead and the second electrode lead overlapped each other, and a sensing terminal coupled to at least one of the first electrode lead or the second electrode lead. The first electrode lead and the second electrode lead are welded to each other at a first weld region to establish electrical connection. The sensing terminal is welded to at least one of the first electrode lead or the second electrode lead at a second weld region to establish electrical connection.

## Description

### TECHNICAL FIELD

The disclosure and implementations disclosed in this patent document generally relate to a battery module including a plurality of secondary battery cells and a method of manufacturing the same.

### BACKGROUND

As the demand for and development of technology for mobile devices, electric vehicles, and energy storage devices continue to grow, the need for secondary battery cells as a power source is also rapidly increasing. A secondary battery cell is a type of battery in which the conversion between chemical energy and electrical energy is reversible, allowing it to be repeated charged and discharged.

A secondary battery cell may include a cell case and an electrode assembly accommodated inside the cell case. The electrode assembly may include a cathode and an anode arranged with a separator positioned therebetween. The battery cell may be designed as a pouch-type cell or a prismatic or cylindrical can-type cell.

A plurality of battery cells may be arranged in a certain pattern to form a battery module, which can be used in various applications such as an electric vehicle and an energy storage system (ESS).

### SUMMARY

The disclosed technology can be implemented in some embodiments to provide a battery module that may include a busbar electrically connected to electrode leads of battery cells, and a support plate supporting the busbar and electrically insulating between the busbar and the battery cells. The electrode leads may be welded to the busbar.

The battery module may include a sensing terminal inside a module housing to detect the status of battery cells, for example, the operating status. The sensing terminal may be installed to measure the voltage of the battery cell. The sensing terminal may be electrically connected to the busbar to receive the voltage signal of the battery cell through the busbar. To this end, the sensing terminal may be welded to the busbar.

In this case, the busbar should include not only a portion in which the electrode lead is welded, but also a portion in which the sensing terminal is welded, and thus the size of the busbar should be increased. In detail, the busbar should be expanded in size for welding the sensing terminal. Accordingly, the space inside the battery module cannot be efficiently utilized.

In addition, the busbar usually includes a metal material, and may thus become an obstacle to discharging high-temperature gas generated during thermal runaway. In detail, as the size of the busbar or the area occupied by the busbar increases, the discharge of gas generated during thermal runaway may not be smooth.

In addition, since the process of welding the electrode lead to the busbar and the process of welding the sensing terminal to the busbar are performed separately, welding efficiency may be reduced.

In an aspect of the disclosed technology, therefore, a battery module in which the size or area of a busbar may be reduced, and a method of manufacturing the same may be provided.

In an aspect of the disclosed technology, a battery module capable of smoothly venting when thermal runaway occurs and a method of manufacturing the same may be provided.

In an aspect of the disclosed technology, a battery module in which an internal space of a battery module may be efficiently utilized and a method of manufacturing the same may be provided.

In an aspect of the disclosed technology, a battery module in which welding efficiency may be increased and the welding quality of a portion in which a sensing terminal is welded may be improved, and a method of manufacturing the same, may be provided.

In an aspect of the disclosed technology, a battery module capable of stably supporting a busbar and a method of manufacturing the same may be provided.

The battery module based on an embodiment of the disclosed technology may be widely applied in green technology fields such as electric vehicles, battery charging stations, and solar power generation and wind power generation using batteries. In addition, the battery module based on an embodiment of the disclosed technology may be used in eco-friendly electric vehicles, hybrid vehicles, and the like to prevent climate change by suppressing air pollution and greenhouse gas emissions.

In some embodiments of the disclosed technology, a battery module includes a cell assembly including a first battery cell that includes a first electrode lead and a second battery cell that includes a second electrode lead; a busbar assembly including a support plate formed of an insulating material and including a plurality of through-holes through which the first electrode lead and the second electrode lead respectively pass, and a busbar electrically connected to the first electrode lead and the second electrode lead, wherein the first electrode lead and the second electrode lead are disposed to overlap each other; and a sensing terminal coupled to at least one of the first electrode lead or the second electrode lead. The first electrode lead and the second electrode lead are welded to each other at a first weld region to establish electrical connection. The sensing terminal is welded to at least one of the first electrode lead or the second electrode lead at a second weld region to establish electrical connection.

In an embodiment, the first electrode lead and the second electrode lead may be overlapped by passing through the plurality of through-holes of the support plate in a first direction and then being bent at a predetermined angle.

In an embodiment, the busbar may be in contact with one of the first electrode lead and the second electrode lead in a first direction in which the first electrode lead and the second electrode lead pass through the plurality of through-holes, and the busbar may be disposed between the first and second electrode leads and the support plate.

In an embodiment, in a second direction in which the first battery cell and the second battery cell are arranged, the support plate may include a first region in which the busbar is disposed between adjacent through-holes and a second region in which the busbar is not disposed between adjacent through-holes.

In an embodiment, the first weld region may include a first weld line and a second weld line spaced apart from each other in a third direction that is parallel to a direction in which the plurality of through-holes extend, and the second weld region may be located between the first weld line and the second weld line.

In an embodiment, the first weld region may include a three-piece welding area that welds the busbar, the first electrode lead, and the second electrode lead together.

In an embodiment, the second weld region may include a four-piece welding area that welds the busbar, the first electrode lead, the second electrode lead, and the sensing terminal together.

In another embodiment, at least one of the first electrode lead or the second electrode lead may include a cut area that is formed to avoid the second weld region.

In another embodiment, the first weld region may include a first weld line and a second weld line spaced apart from each other in a third direction that is parallel to a direction in which the plurality of through-holes extend, and the cut area may be located between the first weld line and the second weld line.

In another embodiment, the second weld region may include a three-piece welding area that welds one of the first electrode lead and the second electrode lead, the busbar, and the sensing terminal together.

In an embodiment, the first electrode lead may be a cathode lead, the second electrode lead may be an anode lead, the busbar may be in contact with the second electrode lead, and the sensing terminal may be in contact with the first electrode lead.

In another embodiment, the first electrode lead may be a cathode lead, the second electrode lead may be an anode lead, the busbar may be in contact with the first electrode lead, and the sensing terminal may be in contact with the second electrode lead.

In an embodiment, the support plate may include a support protrusion disposed on at least a portion of a periphery of the busbar, and a mounting groove located between adjacent support protrusions, wherein the busbar is mounted on the mounting groove.

In some embodiments of the disclosed technology, a battery module includes a cell assembly including a first battery cell that includes a first electrode lead and a second battery cell that includes a second electrode lead; a busbar electrically connected to the first electrode lead and the second electrode lead, wherein the first electrode lead and the second electrode lead overlap each other; and a sensing terminal coupled to at least one of the first electrode lead or the second electrode lead. The first electrode lead and the second electrode lead are electrically connected by a first weld region. At least one of the first electrode lead or the second electrode lead are electrically connected to the sensing terminal by a second weld region. The first weld region includes a first weld line and a second weld line spaced apart from each other. The second weld region is located between the first weld line and the second weld line.

In some embodiments of the disclosed technology, a method of manufacturing a battery module includes inserting a first electrode lead of a first battery cell and a second electrode lead of a second battery cell into a through-hole of a support plate; bending the first electrode lead and the second electrode lead such that the first electrode lead and the second electrode lead overlap each other to face a busbar; welding the first electrode lead, the second electrode lead, and the busbar to form a first weld region; and welding a sensing terminal to at least one of the first electrode lead or the second electrode lead to form a second weld region.

In an embodiment, inserting the first electrode lead and the second electrode lead into the through-hole of the support plate may include passing the first electrode lead and the second electrode lead through the through-hole in a first direction. In an embodiment, bending the first electrode lead and the second electrode lead may include bending the first electrode lead and the second electrode lead in a second direction such that the first electrode lead and the second electrode lead overlap each other.

In an embodiment, welding the first electrode lead, the second electrode lead, and the busbar to form the first weld region may include forming a first weld line and a second weld line spaced apart from each other in a third direction that is parallel to a direction in which the through-hole extends. In an embodiment, welding the sensing terminal to at least one of the first electrode lead or the second electrode lead to form the second weld region may include forming a second weld region between the first weld line and the second weld line.

In an embodiment, welding the first electrode lead, the second electrode lead, and the busbar to form the first weld region may include forming a three-piece welding area as the first weld region.

In an embodiment, welding the sensing terminal to at least one of the first electrode lead or the second electrode lead to form the second weld region may include forming a four-piece welding area as the second weld region.

In an embodiment, at least one of the first electrode lead or the second electrode lead may include a cut area formed to avoid the second weld region. In an embodiment, welding the sensing terminal to at least one of the first electrode lead or the second electrode lead to form the second weld region may include forming a three-piece welding area as the second weld region.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery module based on an embodiment.
FIG. 2 is an exploded perspective view of the battery module illustrated in FIG. 1.
FIG. 3 is a perspective view of a battery cell based on an embodiment.
FIG. 4 is a front view illustrating a connection relationship between a busbar, an electrode lead, and a sensing terminal based on an embodiment.
FIG. 5 is a cross-sectional view taken along line I-I' of FIG. 4, illustrating a state in which an electrode lead passes through a through-hole of a busbar assembly.
FIG. 6 is a cross-sectional view taken along line I-I' of FIG. 4, illustrating a state in which an electrode lead is bent.
FIG. 7 is a front view illustrating a state in which an electrode lead is electrically connected to a busbar by a first weld.
FIG. 8 is a front view illustrating a state in which a sensing terminal is electrically connected to an electrode lead by a second weld.
FIG. 9 is a cross-sectional view taken along line I-I' of FIG. 4, illustrating a state in which a sensing terminal is attached to an electrode lead.
FIG. 10 is a cross-sectional view illustrating another example of the configuration shown in FIG. 9.
FIG. 11 is a front view illustrating a state in which an electrode lead is electrically connected to a busbar by a first weld based on another embodiment.
FIG. 12 is a front view illustrating a state in which a sensing terminal is electrically connected to an electrode lead by a second weld based on another embodiment.
FIG. 13 is a cross-sectional view taken along line II-II' of FIG. 12, illustrating a state in which a sensing terminal is attached to an electrode lead.
FIG. 14 is a flow chart illustrating a main process of a method of manufacturing a battery module based on an embodiment.

### DETAILED DESCRIPTION

Various embodiments disclosed in this patent document are described with reference to the accompanying drawings.

The same reference numbers or symbols described in respective drawings attached to this specification represent parts or components that perform substantially the same functions. For the convenience of explanation and understanding, the same reference numbers or symbols may be used in different embodiments. In detail, even if components with the same reference numbers are depicted in multiple drawings, the multiple drawings do not all mean one embodiment.

In the following description, the singular expression includes the plural expression unless the context clearly indicates otherwise. It should be understood that the terms "include", "comprise" and the like are intended to specify the presence of features, numbers, operations, operations, components, parts, or combinations thereof described in the specification, but do not preclude the possibility of the presence or addition of one or more other features, numbers, operations, operations, components, parts, or combinations thereof.

In addition, in the following description, the expressions "upper side", "upper", "upper portion", "lower", "below", "side", "side surface", "front", "rear", and the like are expressed based on the direction depicted in the drawings, and it is noted in advance that they may be expressed differently if the direction of the corresponding object changes.

In addition, terms including ordinal numbers such as "first", "second", and the like may be used in the present specification and claims to distinguish between components. These ordinal numbers are used to distinguish between identical or similar components, and the meaning of the terms should not be limited due to the use of these ordinal numbers. For example, the components associated with these ordinal numbers should not be limited in their order of use or arrangement, and the like, by their numbers. If necessary, respective ordinal numbers may be used interchangeably.

Hereinafter, the present disclosure will be described in detail with reference to the attached drawings. However, this is merely illustrative and the present disclosure is not limited to the detailed embodiments described as examples.

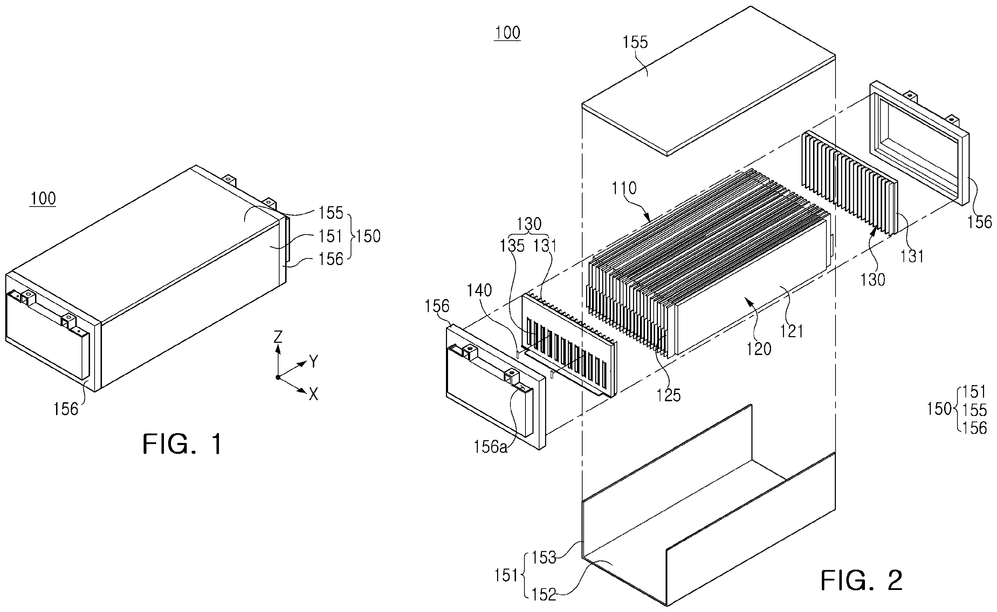

In some embodiments, a battery module 100 may be implemented as will be discussed below with reference to FIGS. 1 to 13.

In some embodiments of the disclosed technology, a battery module 100 may refer to an Energy Storage System (ESS) or a battery pack including a plurality of battery cells 120. In addition, the battery module 100 based on an embodiment may include various types of structures such as cell-to-pack, cell-to-chassis, and cell-to-body portion.

FIG. 1 is a perspective view of a battery module 100 based on an embodiment. FIG. 2 is an exploded perspective view of the battery module 100 illustrated in FIG. 1.

A battery module 100 based on an embodiment may include a cell assembly 110, a busbar assembly 130, and a sensing terminal 140. The battery module 100 may additionally include a module housing 150.

The cell assembly 110 may include a plurality of battery cells 120. The plurality of battery cells 120 may be arranged in a second direction (e.g., X direction). In an embodiment, the plurality of battery cells 120 may be stacked on each other so that wide surfaces thereof face each other. For example, the plurality of battery cells 120 may be stacked in the second direction (e.g., X direction). However, it is also possible to have a shape in which the plurality of battery cells 120 are stacked in a gravity direction (e.g., a third direction (e.g., Z direction)) as needed.

Each battery cell 120 may be configured as a pouch type cell in which an electrode assembly is accommodated in a pouch (or case) 121. Each battery cell 120 may include an electrode lead 125 exposed externally of the pouch 121. The electrode lead 125 may be electrically connected to the electrode assembly.

In the battery cell 120 based on an embodiment, the width direction (or length direction) refers to a first direction (e.g., Y direction) in which the electrode lead 125 extends from the electrode assembly, the thickness direction refers to a second direction (e.g., X direction) perpendicular to a wide surface of the pouch 121, and the height direction (or vertical direction or gravity direction) refers to a third direction (e.g., Z direction) perpendicular to the width direction and the thickness direction. The first direction (e.g., Y direction), the second direction (e.g., X direction), and the third direction (e.g., Z direction) are defined to include not only the plus axis direction, which is the arrow direction of the coordinate axis, but also the minus axis direction.

The busbar assembly 130 may include an electrically conductive busbar 135 electrically connected to an electrode lead 125 of a battery cell 120, and an electrically insulating support plate 131. The support plate 131 may be disposed between a plurality of battery cells 120 and the electrically conductive busbar 135 to support the busbar 135. The support plate 131 may electrically insulate between the busbar 135 and a pouch 121 of the battery cell 120. As an example, the busbar 135 may be fixed to the support plate 131 by hook-joining, insert-joining, or fusion-joining. However, the method of joining the busbar 135 to the support plate 131 may be variously changed.

The busbar assembly 130 may be disposed at a position facing the electrode lead 125 of the battery cell 120 and may be electrically connected to a plurality of electrode leads 125. For example, when the electrode lead 125 is disposed at both ends of the battery cell 120 in the first direction (e.g., Y direction), the busbar assembly 130 may be respectively disposed at both ends of the battery cell 120 in the first direction (e.g., Y direction) and may be connected to the electrode lead 125.

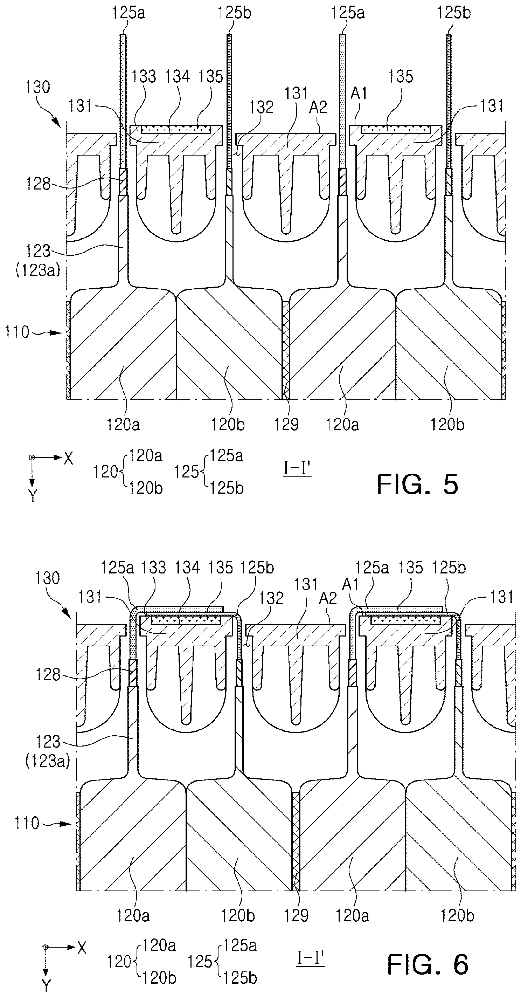

The electrode lead 125 may be bent at the outside of the busbar assembly 130 by penetrating the support plate 131 of the busbar assembly 130 and may be connected to the busbar 135. To this end, the support plate 131 may include a through-hole 132 in FIG. 5 through which the electrode lead 125 passes. The electrode lead 125 may be welded to the busbar 135 while passing through the through-hole 132 (see FIG. 5). A plurality of battery cells 120 may be electrically connected in series and/or in parallel by the plurality of busbars 135. The busbar assembly 130 may include a connection terminal extended from at least one busbar 135 for electrical connection between the busbar 135 and the outside. The battery cell 120 may be electrically connected externally through the connection terminal. The connection terminal may be exposed externally through an opening 156a formed in the end plate 156.

The sensing terminal 140 may be used to detect a status or property of the battery cell 120, for example, the operating status. In various applications of the disclosed technology including electric vehicles, a battery management system BMS may be implemented to include a battery management unit BMU as a controller of the BMS and other battery management components including sensing circuitry or sensing mechanisms such as the sensing terminal 140 for measuring and monitoring a proper of the battery cell 120 (e.g., a voltage, a current or a temperature of the battery cell) and to provide the measured property to the BMU for controlling the operations and performance of the battery cell. As a specific example, the sensing terminal 140 may include a voltage sensor to measure the voltage of the battery cell 120. The sensing terminal 140 may be electrically connected to the electrode lead 125 of the battery cell 120 to receive the voltage signal of the battery cell 120. To this end, the sensing terminal 140 may be coupled to the electrode lead 125. The electrode lead 125 may be bent after passing through the through-hole 132 (see FIG. 5) of the support plate 131. Some of the electrode leads 125 may be in contact with the busbar 135. The sensing terminal 140 may be welded to the electrode lead 125 in the bent state.

The module housing 150 may have a shape that covers at least a portion of the cell assembly 110. The module housing 150 may form at least a portion of the exterior of the battery module 100.

The module housing 150 may have various shapes or divided structures. As an example, the module housing 150 may be configured to include a housing body portion 151 having a cross-sectional shape with one side open, and a housing cover 155 that is combined with the housing body portion 151 to form an internal space. The housing cover 155 may cover a top surface of the cell assembly 110. The housing body portion 151 may include a lower plate 152 supporting the lower portion of the cell assembly 110, and a side plate 153 that extends in a third direction (e.g., Z direction) from both ends of the lower plate 152 and supports a side surface of the cell assembly 110. The module housing 150 may have a structure in which an end plate 156 is coupled to the longitudinal front and rear surfaces of the module housing 150. The end plate 156 may be coupled to both sides where the electrode leads 125 of the battery cell 120 are disposed, for example, both sides of the module housing 150 in the first direction (e.g., Y direction), respectively.

A cell assembly 110 may be disposed inside the module housing 150. At least one side of the module housing 150 may function as a heat dissipation plate that releases heat generated by the battery cell 120 to the outside. At least a portion of the module housing 150 may be made of a material with high thermal conductivity, such as metal. For example, the module housing 150 may include aluminum. However, the material of the module housing 150 is not limited thereto, and various materials may be used as long as they have strength and thermal conductivity comparable to metal, even if they are non-metal.

Although the module housing 150 in FIGS. 1 and 2 is depicted as having a structure that completely surrounds the outer surface of the cell assembly 110, the module housing 150 may also be configured such that at least one surface of the cell assembly 110 is exposed. For example, the module housing 150 may also have a configuration that does not cover the lower surface of the cell assembly 110.

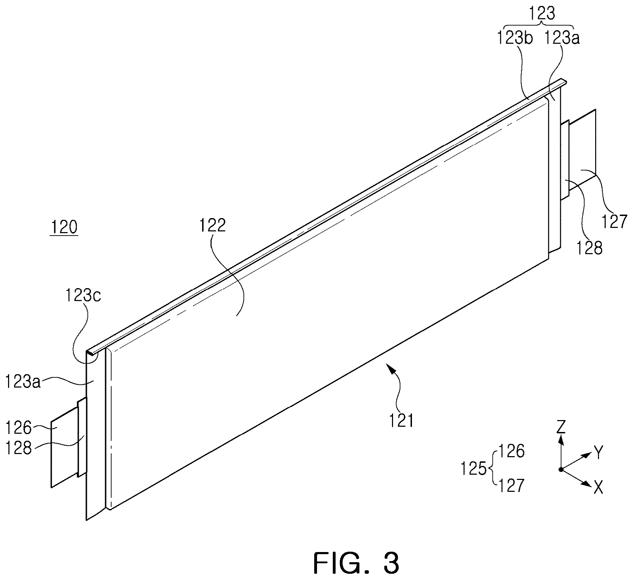

FIG. 3 is a perspective view of a battery cell 120 In an embodiment.

Referring to FIG. 3, the battery cell 120 may include a pouch type cell in which an electrode assembly is accommodated inside a flexible pouch 121.

The battery cell 120 may include a pouch 121, an electrode assembly, and an electrode lead 125.

The pouch 121 may include a body portion 122 that accommodates an electrode assembly therein, and a sealing portion 123 that extends from at least a portion of the periphery of the body portion 122 to seal the body portion 122.

The pouch 121 may provide an internal space in which the electrode assembly and the electrolyte are accommodated. For example, the pouch 121 may be composed of an outer sheet in which a resin such as polypropylene, aluminum and the like are laminated. However, the material constituting the pouch 121 may be variously changed.

The body portion 122 may be formed in a container shape and may provide an internal space of a predetermined shape (e.g., a hexahedron) in which the electrode assembly and the electrolyte are accommodated.

The sealing portion 123 may extend from at least a portion of the periphery of the body portion 122. The sealing portion 123 may be formed in a flange shape that extends outward from at least a portion of the periphery of the body portion 122. For example, when forming a pouch 121 by folding a single outer sheet, the sealing portion 123 may have a shape extending from three of the four sides of the body portion 122. In contrast, when forming a pouch 121 by overlapping two outer sheets, the sealing portion 123 may have a shape extending from all four sides of the body portion 122. The sealing portion 123 may have a state in which the outer sheets constituting the pouch 121 are overlapped or folded with each other. The sealing portion 123 may include a portion in which the outer sheets that are overlapped with each other are joined to seal the body portion 122. The joining of the sealing portion 123 may use a heat-melting method, but is not limited thereto.

The electrode assembly may be accommodated in the body portion 122 of the pouch 121. The electrode assembly may include a cathode, an anode, and a separator. The separator may be interposed between the cathode and the anode to electrically insulate the cathode and the anode. The cathode, the anode, and the separator may be repeatedly disposed to form an electrode assembly. As an example, the electrode assembly may have a stacked form in which the cathode, the separator, the anode, and the separator are repeatedly stacked. However, the electrode assembly is not limited to the stack structure. For example, the electrode assembly may also have a wound form, a zigzag-folding form, and a stack-folding form.

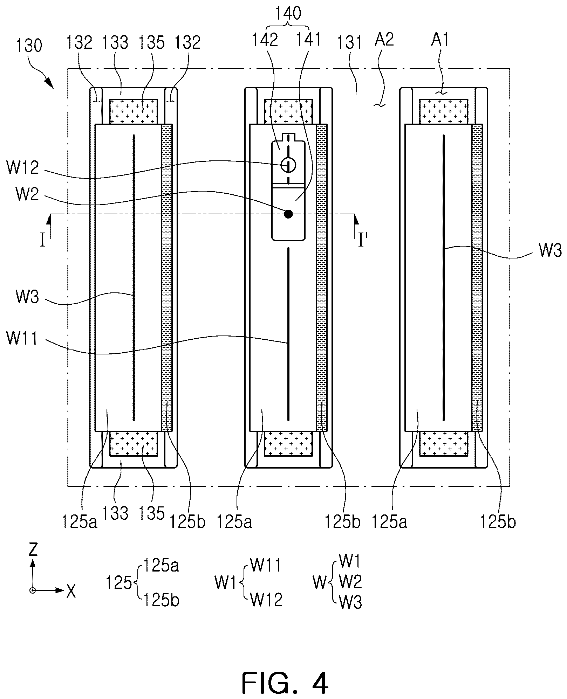

The electrode lead 125 may be electrically connected to the electrode assembly. The electrode lead 125 may be exposed externally through a portion of the sealing portion 123. For example, the electrode lead 125 may have a shape extending from the electrode assembly in a first direction (e.g., Y direction) and may be exposed externally of the sealing portion 123. The electrode lead 125 may include a first electrode lead 125a of FIG. 4 and a second electrode lead 125b of FIG. 4 having different polarities. For example, the first electrode lead 125a may be a cathode lead 126 connected to the cathode, and the second electrode lead 125b may be an anode lead 127 connected to the anode.

In an embodiment, the sealing portion 123 may be divided into a first sealing portion 123a located on a flange where the electrode lead 125 is disposed, and a second sealing portion 123b located on a flange where the electrode lead 125 is not disposed. In the first sealing portion 123a, the electrode lead 125 may be covered by an insulating portion 128. The insulating portion 128 may increase the electrical insulation performance between the electrode lead 125 and the pouch 121 and increase the degree of sealing of the sealing area. The insulating portion 128 may include an insulating film.

In the case of the battery cell 120 illustrated in FIG. 3, the electrode leads 125 are illustrated as being disposed on both sides of the body portion 122 based on the first direction (e.g., Y direction) of the battery cell 120, respectively. For example, FIG. 3 illustrates a configuration in which the cathode lead 126 and the anode lead 127 are disposed in opposite directions. However, it is also possible for both the cathode lead 126 and the anode lead 127 to be disposed on one side of the body portion 122.

In an embodiment, in order to increase the bonding reliability of the sealing portion 123 and reduce the area occupied by the sealing portion 123, the battery cell 120 may be formed in a form that is folded at least once. For example, the second sealing portion 123b in which the electrode lead 125 is not disposed may include a folding portion 123c folded in the first direction (e.g., Y direction), which is the longitudinal direction of the battery cell 120. The folding portion 123c may have a folded shape by at least one folding process.

FIG. 4 is a front view illustrating a connection relationship between a busbar 135, an electrode lead 125, and a sensing terminal 140 based on an embodiment. FIG. 5 is a cross-sectional view along the line I-I' of FIG. 4, illustrating a state in which an electrode lead 125 passes through a through-hole 132 of a busbar assembly 130. FIG. 6 is a cross-sectional view along the line I-I' of FIG. 4, illustrating a state in which an electrode lead 125 is bent.

Referring to FIGS. 4 to 6, a cell assembly 110 may include a first battery cell 120a including a first electrode lead 125a and a second battery cell 120b including a second electrode lead 125b. In FIGS. 5 and 6, the first battery cell 120a may be defined as a battery cell 120 in which the first electrode lead 125a passes through the through-hole 132 of the support plate 131, and the second battery cell 120b may be defined as a battery cell 120 in which the second electrode lead 125b passes through the through-hole 132 of the support plate 131. The polarities of the first electrode lead 125a and the second electrode lead 125b are opposite to each other. For example, the first electrode lead 125a may be configured as a cathode lead 126 of FIG. 3 and the second electrode lead 125b may be configured as an anode lead 127 of FIG. 3, or vice versa.

A busbar assembly 130 may include a support plate 131 of insulation (or insulating support plate) having a plurality of through-holes 132 formed therein through which a first electrode lead 125a and a second electrode lead 125b pass, respectively, and a busbar 135 electrically connected to the first electrode lead 125a and the second electrode lead 125b, the first electrode lead 125a and the second electrode lead 125boverlapped each other. The busbar 135 in which the first electrode lead 125a and the second electrode lead 125b are electrically connected in an overlapping state.

The support plate 131 supports the busbar 135 and may have electrical insulation properties to electrically insulate the busbar 135 and the body portion 122 of FIG. 3 of the battery cell 120. The busbar 135 may be electrically connected to the electrode lead 125. However, in some implementations, the support plate 131 may be omitted or replaced with another component.

The support plate 131 may include a support protrusion 133 disposed on at least a portion of the periphery of the busbar 135, and a mounting groove 134 which is located between adjacent support protrusions 133 and on which the busbar 135 is mounted.

Since the busbar 135 is mounted in the mounting groove 134 and supported by the support protrusion 133, the busbar 135 may be stably installed on the support plate 131. The busbar 135 may be coupled to the support plate 131 by hook connection, insert connection, fusion, insert injection, or the like.

The support protrusion 133 may function as a bending reference line of the electrode lead 125 by coming into contact with the electrode lead 125 when the electrode lead 125 is bent. The support protrusion 133 may have a shape that completely surrounds the periphery of the busbar 135 or the mounting groove 134, but is not limited thereto. For example, the support protrusion 133 may also be disposed only on the side of the busbar 135.

The sensing terminal 140 may be installed to measure the voltage of the battery cell 120. The sensing terminal 140 may be electrically connected to the electrode lead 125 of the battery cell 120 and receive a voltage signal of the battery cell 120.

The sensing terminal 140 may be coupled (connected) to at least one of the first electrode lead 125a or the second electrode lead 125b. The first electrode lead 125a and the second electrode lead 125b pass through the through-hole 132 of the support plate 131 and are bent to come into contact with the busbar 135, and the sensing terminal 140 may be welded to the electrode lead 125 in the bent state.

The sensing terminal 140 may include a contact portion 141 welded to the electrode lead 125 and a circuit connection portion 142 connected to a circuit to transmit voltage information of the battery cell 120. Voltage information of the battery cell 120 detected through the contact portion 141 may be transmitted to a cell monitoring unit (CMU) and/or a battery management system (BMS) through the circuit connection portion 142.

The electrode lead 125, the busbar 135, and the sensing terminal 140 may be welded by a weld (W). The weld (W) may include a first weld W1, a second weld W2, and a third weld W3. In some embodiments, the terms "first weld," "second weld," and "third weld" refer to first, second, and third weld regions, respectively.

The first electrode lead 125a and the second electrode lead 125b may be welded by a first weld W1 and electrically connected. The first electrode lead 125a and the second electrode lead 125b may be electrically connected by being welded by the first weld W1. At least one of the first electrode lead 125a or the second electrode lead 125b and the sensing terminal 130 may be electrically connected by welding, by a second weld W2. At least one of the first electrode lead 125a or the second electrode lead 125b and the sensing terminal 140 may be electrically connected by being welded by the second weld W2.

The first weld W1 and the second weld W2 may not overlap but may be spaced apart. The first weld W1 may include a first weld line W11 and a second weld line W12 that are spaced apart from each other in a third direction (e.g., Z direction) parallel to the direction in which the plurality of through-hole 132 extends. As an example, the first weld line W11 may be formed on the lower side and the second weld line W12 may be formed on the upper side, and the first weld line W11 and the second weld line W12 may be spaced apart from each other.

The second weld W2 may be located between the first weld line W11 and the second weld line W12. After the first weld W1 is formed, the sensing terminal 140 may be disposed on the electrode lead 125 and the second weld W2 may be formed while the sensing terminal 140 is in contact with one of the first electrode lead 125a and the second electrode lead 125b. In the process of forming the second weld W2, the sensing terminal 140 may be disposed to cover a portion of the first weld W1. For example, the sensing terminal 140 may cover at least a portion of the second weld line W12.

In an embodiment, since the second weld W2 is located between the first weld line W11 and the second weld line W12, it may be more stable against vibration or impact than when the second weld W2 is located at the upper end of the electrode lead 125.

The second weld W2 may be formed by spot welding, but is not limited thereto. For example, the second weld W2 may also have a line shape.

In an embodiment, since the first weld W1 and the second weld W2 do not overlap each other, the welding quality between the sensing terminal 140 and the electrode lead 125 may be improved. For example, since the second weld W2 for welding the sensing terminal 140 is formed in a portion in which the first weld W1 is not formed, the quality of the second weld W2 may be unaffected by the first weld W1.

The first weld W1 and the second weld W2 may be formed by laser welding, but are not limited thereto. For example, other welding methods such as ultrasonic welding and resistance welding may also be used.

Meanwhile, the first electrode lead 125a and the second electrode lead 125b installed on the busbar 135 where the sensing terminal 140 is not disposed may be welded by the third weld W3. The third weld W3 may weld the first electrode lead 125a and the second electrode lead 125b together with the busbar 135. The third weld W3 may be formed as one continuous line, but is not limited thereto. For example, the third weld W3 may be divided into two lines like the first weld W1 or divided into three or more lines.

The third weld W3 may also be formed by laser welding, but is not limited thereto.

The first electrode lead 125a and the second electrode lead 125b may have an overlapped shape by passing through the plurality of through-hole 132 of the support plate 131 in the first direction (e.g., Y direction) and then being bent at a predetermined angle. The first direction (e.g., Y direction) is the direction in which the electrode lead 125 extends outward through the sealing portion 123.

Referring to FIG. 5, the cell assembly 110 may include a plurality of battery cells 120. The cell assembly 110 may include a first battery cell 120a in which the first electrode lead 125a passes through the through-hole 132 of the support plate 131 and a second battery cell 120b in which the second electrode lead 125b passes through the through-hole 132 of the support plate 131. A buffer pad 129 may be installed between at least some of the battery cells 120 to buffer swelling of the battery cells 120.

The first electrode lead 125a of the first battery cell 120a and the second electrode lead 125b of the second battery cell 120b may be inserted into the through-hole 132 of the support plate 131 in the first direction (e.g., Y direction) while being extended flatly. The first electrode lead 125a and the second electrode lead 125b pass through the through-hole 132 of the support plate 131, and the ends of the first electrode lead 125a and the second electrode lead 125b may be located on the outside of the support plate 131.

Referring to FIG. 6, the first electrode lead 125a and the second electrode lead 125b may be bent at a predetermined angle so as to overlap with the busbar 135. For example, the first electrode lead 125a and the second electrode lead 125b may be bent at approximately 90 degrees, but the angle at which they are bent is not limited thereto. The first electrode lead 125a and the second electrode lead 125b may overlap with the busbar 135 in the bent state. Either of the first electrode lead 125a and the second electrode lead 125b may be in contact with the busbar 135.

The busbar 135 may be in contact with one of the first electrode lead 125a and the second electrode lead 125b in the first direction (e.g., Y direction) in which the first electrode lead 125a or the second electrode lead 125b passes through the plurality of through-hole 132. The busbar 135 may be disposed between the electrode lead 125 (e.g., the first electrode lead and the second electrode lead) and the support plate 131.

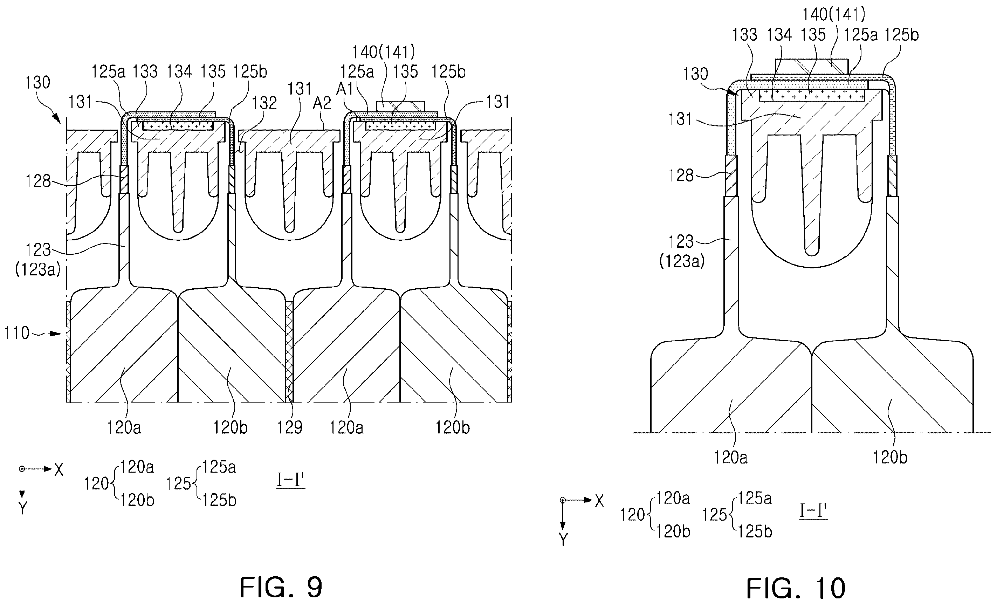

For example, in a direction away from the sealing portion 123 of the battery cell 120, the support plate 131, the busbar 135, the second electrode lead 125b, and the first electrode lead 125a may be sequentially disposed. Alternatively, in a direction away from the sealing portion 123 of the battery cell 120, the support plate 131, the busbar 135, the first electrode lead 125a, and the second electrode lead 125b may be sequentially disposed (see FIG. 10).

The support plate 131 not only electrically insulates between the busbar 135 and the body portion 122 of FIG. 3 of the battery cell 120, but also stably supports the busbar 135. Accordingly, the electrode lead 125 welded to the busbar 135 may be maintained in a stable state even under vibration or impact.

In the second direction (e.g., X direction) in which the first battery cell 120a and the second battery cell 120b are arranged, the support plate 131 may include a first region A1 where a busbar 135 is disposed between adjacent through-holes 132 and a second region A2 where the busbar 135 is not disposed between adjacent through-holes 132. The first region A1 and the second region A2 may be disposed alternately.

In an embodiment, since the busbar 135 is not disposed in the second region A2, the area where the busbar 135 covers the support plate 131 may be small. Therefore, in an embodiment, the phenomenon where gas generated in the battery cell 120 is blocked by the busbar 135 when thermal runaway occurs may be reduced. Accordingly, when thermal runaway occurs, high-temperature gas may be smoothly vented.

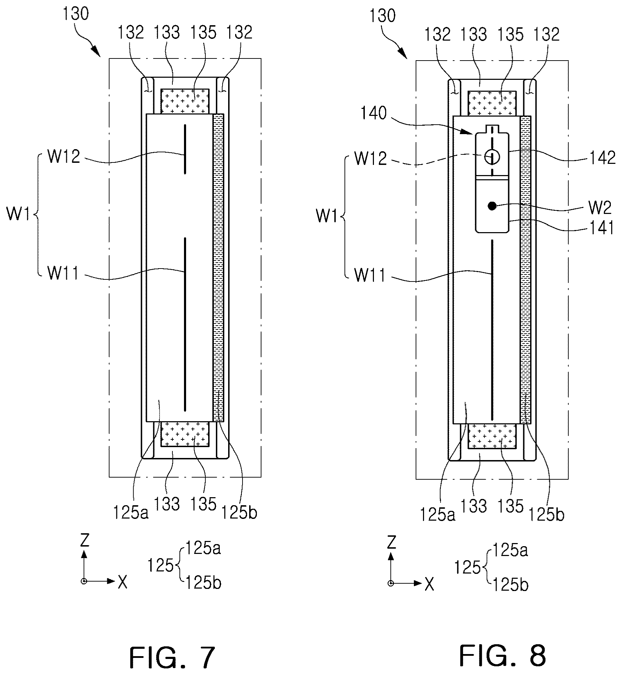

FIG. 7 is a front view illustrating a state in which the electrode lead 125 is electrically connected to the busbar 135 by the first weld W1.

Referring to FIG. 7 together with FIG. 6, after the first electrode lead 125a and the second electrode lead 125b are bent, the first electrode lead 125a may be welded to the second electrode lead 125b to form the first weld W1.

The first weld W1 may include a first weld line W11 and a second weld line W12 that are spaced apart from each other in a third direction (e.g., Z direction) parallel to the direction in which the through-hole 132 extends.

The first weld W1 may include a three-piece welding area that welds the busbar 135, the first electrode lead 125a, and the second electrode lead 125b together. For example, when welding the first electrode lead 125a and the second electrode lead 125b, the first electrode lead 125a and the second electrode lead 125b may be welded together with the busbar 135.

FIG. 8 is a front view illustrating a state in which the sensing terminal 140 is electrically connected to the electrode lead 125 by the second weld W2. FIG. 9 is a cross-sectional view along the line I-I' of FIG. 4, illustrating a state in which the sensing terminal 140 is attached to the electrode lead 125.

The second weld W2 may be formed by welding at least one of the first electrode lead 125a and/or the second electrode lead 125b to the sensing terminal 140. The second weld W2 may be located between the first weld line W11 and the second weld line W12. After the first weld W1 is formed, the sensing terminal 140 may be disposed on the electrode lead 125 and the second weld W2 may be formed while in contact with the sensing terminal 140 and one of the first electrode lead 125a and the second electrode lead 125b.

The second weld W2 may include a four-piece welding area in which the busbar 135, the first electrode lead 125a, the second electrode lead 125b, and the sensing terminal 140 are welded together (simultaneously). For example, when welding the sensing terminal 140, the sensing terminal 140 may be welded together with the first electrode lead 125a, the second electrode lead 125b, and the busbar 135. However, the second weld W2 is not limited to a four-piece welding area. For example, by adjusting parameters such as laser irradiance or laser output during laser welding, the second weld W2 may be formed to include a three-piece welding area in which the sensing terminal 140, the first electrode lead 125a, and the second electrode lead 125b are welded, or set to include a two-piece welding area in which either the first electrode lead 125a or the second electrode lead 125b and the sensing terminal 140 are welded. As another example, as described below, the second weld W2 may also be configured as a three-piece welding area in which one of the first electrode lead 125a and the second electrode lead 125b, the sensing terminal 140, and the busbar 135 are welded.

In a direction away from the sealing portion 123 of the battery cell 120, a support plate 131, a busbar 135, a second electrode lead 125b, a first electrode lead 125a, and a sensing terminal 140 may be sequentially disposed.

In an embodiment, the polarities of the first electrode lead 125a and the second electrode lead 125b are opposite to each other, and the first electrode lead 125a may be one of the cathode lead and the anode lead, and the second electrode lead 125b may be the other of the cathode lead and the anode lead.

As an example, the first electrode lead 125a may be a cathode lead, the second electrode lead 125b may be an anode lead, the busbar 135 may be in contact with the second electrode lead 125b, and the sensing terminal 140 may be in contact with the first electrode lead 125a.

In an embodiment, since the sensing terminal 140 is not directly welded to the busbar 135 but is welded to the electrode lead 125, an area for welding the sensing terminal 140 to the busbar 135 is not required. Accordingly, the size or area of the busbar 135 may be reduced, so that the cost for manufacturing the busbar 135 may be reduced. Since the size of the busbar 135 is reduced, the internal space of the battery module 100 may be efficiently utilized, and the degree of design freedom may be improved.

In an embodiment, since the area where the busbar 135 covers the support plate 131 is small, high-temperature gas may be easily discharged during thermal runaway.

In an embodiment, since the second weld W2 on which the sensing terminal 140 is welded does not overlap with the first weld W1, the welding quality may be improved, and since no overlapping welding occurs, the welding efficiency may also be improved.

Meanwhile, in the embodiments of FIGS. 4 to 9, an example is described in which one first electrode lead 125a and one second electrode lead 125b overlap the busbar 135, but the number of electrode leads 125 overlapped with the busbar 135 is not limited thereto, and various changes are possible.

For example, it is also possible to dispose two first electrode leads 125a and two second electrode leads 125b on one busbar 135. For example, four electrode leads 125 of the battery cell 120 may be connected to one busbar 135. In this case, the first weld W1 may include a five-piece welding area, and the second weld W2 may include a six-piece welding area.

FIG. 10 is a cross-sectional view illustrating another example of the configuration shown in FIG. 9.

Compared to the embodiments of FIGS. 4 to 9, the modified example illustrated in FIG. 10 differs only in the order of the first electrode lead 125a and the second electrode lead 125b. Apart from this difference, the description of FIGS. 4 to 9 may also be applied to the example shown in FIG. 10.

As illustrated in FIG. 10, in a direction away from the sealing portion 123 of the battery cell 120, a support plate 131, a busbar 135, a first electrode lead 125a, a second electrode lead 125b, and a sensing terminal 140 may be sequentially disposed.

For example, the first electrode lead 125a may be a cathode lead, the second electrode lead 125b may be an anode lead, and the busbar 135 may be in contact with the first electrode lead 125a, while the sensing terminal 140 may be in contact with the second electrode lead 125b.

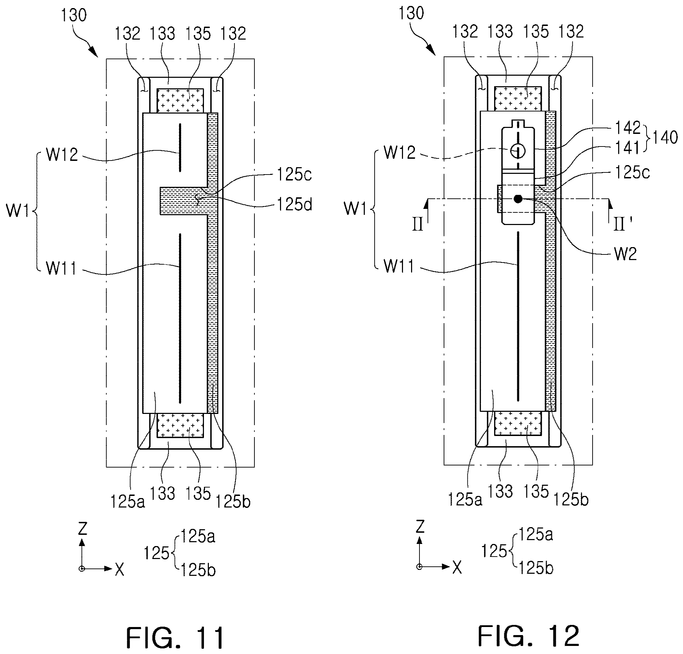

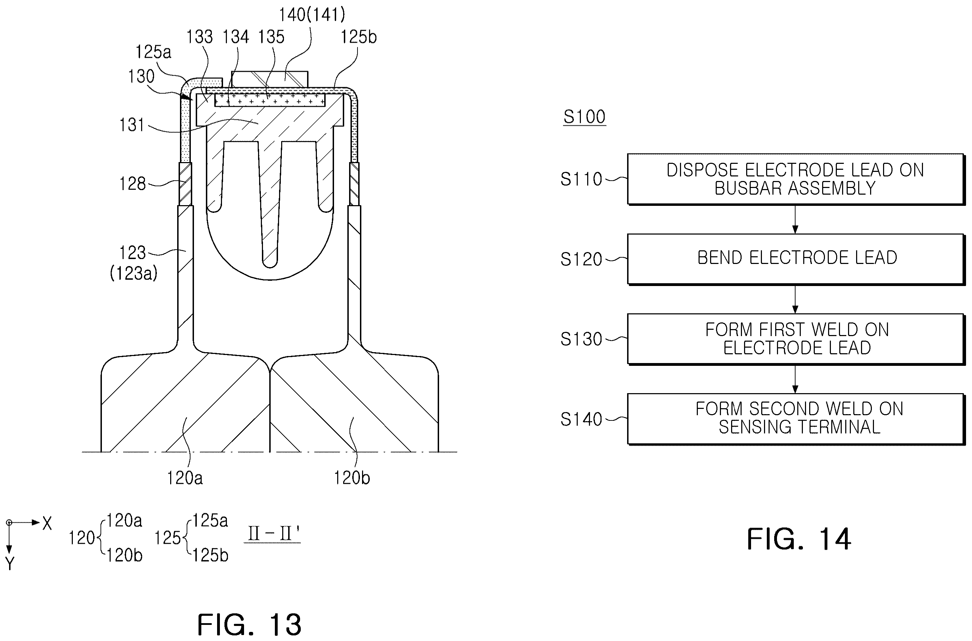

FIG. 11 is a front view illustrating a state in which the electrode lead 125 is electrically connected to the busbar 135 by the first weld W1 based on another embodiment. FIG. 12 is a front view illustrating a state in which a sensing terminal 140 is electrically connected to an electrode lead 125 by a second weld W2 based on another embodiment. FIG. 13 is a cross-sectional view taken along line II-II' of FIG. 12, illustrating a state in which a sensing terminal 140 is attached to an electrode lead 125.

Compared to the embodiments illustrated in FIGS. 4 to 9, the embodiments illustrated in FIGS. 11 to 13 differ in that a cut area 125c is formed in the electrode lead 125 and a second weld W2 is formed in the cut area 125c. Except for the differences, the descriptions of FIGS. 4 to 9 may also be applied to the embodiments illustrated in FIGS. 11 to 13.

At least one of the first electrode lead 125a or the second electrode lead 125b may include a cut area 125c formed to avoid the second weld W2.

The cut area 125c may be formed in an electrode lead 125 disposed on the outside among the first electrode lead 125a and the second electrode lead 125b. For example, when the first electrode lead 125a is disposed on the outside, the first electrode lead 125a may include a cut area 125c formed to avoid the second weld W2. As the cut area 125c is formed in the first electrode lead 125a, the second electrode lead 125b may include an exposure area 125d exposed through the cut area 125c.

The first weld W1 includes a first weld line W11 and a second weld line W12 that are spaced apart from each other in a third direction (e.g., Z direction) parallel to the direction in which the through-hole 132 extends, and a cut area 125c may be located between the first weld line W11 and the second weld line W12. The first weld W1 may connect the first electrode lead 125a, the second electrode lead 125b, and the busbar 135 to each other in an area where the cut area 125c is not formed.

The second weld W2 may include a three-piece welding area in which one of the first electrode lead 125a and the second electrode lead 125b, the busbar 135 and the sensing terminal 140 are welded together (simultaneously).

In the case where the second weld W2 is formed as a three-piece welding area, since the laser output may be small during laser welding, the welding of the sensing terminal 140 may be performed more smoothly.

Usually, the thickness of the cathode lead including aluminum or an aluminum alloy may be thicker than the thickness of the anode lead including copper or a copper alloy. Therefore, in the case where the electrode lead 125 disposed on the outside is a cathode lead, a cut area 125c may be formed in the cathode lead that is thicker than the anode lead in order to reduce the overall welding thickness of the second weld W2.

In the case in which the first electrode lead 125a disposed on the outside is a cathode lead, a cut area 125c may be formed in the first electrode lead 125a. In this case, the sensing terminal 140, the second electrode lead 125b, and the busbar 135 may be welded in three sheets.

In contrast, in the case in which the first electrode lead 125a disposed on the outside is an anode lead, it is also possible to form a cut area 125c in the second electrode lead 125b. In this case, the sensing terminal 140, the first electrode lead 125a, and the busbar 135 may be welded in three sheets.

FIG. 14 is a flow chart illustrating a main process of a method (S100) for manufacturing a battery module 100 based on an embodiment.

Referring to FIG. 14 together with FIGS. 4 to 13, a method (S100) for manufacturing a battery module 100 based on an embodiment will be described.

The method (S100) for manufacturing a battery module 100 based on an embodiment may include an electrode lead arrangement operation (S110), an electrode lead bending operation (S120), a first welding operation (S130), and a second welding operation (S140).

Referring to FIG. 5, the electrode lead arrangement operation (S110) may insert the first electrode lead 125a of the first battery cell 120a and the second electrode lead 125b of the second battery cell 120b into the through-hole 132 of the support plate 131. The first electrode lead 125a and the second electrode lead 125b may pass through the through-hole 132 in a flatly extended state, and the ends of the first electrode lead 125a and the second electrode lead 125b may be located on the outside of the busbar assembly 130.

The electrode lead arrangement operation (S110) may allow the first electrode lead 125a and the second electrode lead 125b to pass through the through-hole 132 in the first direction (e.g., Y direction).

Referring to FIG. 6, the electrode lead bending operation (S120) may be configured to bend (fold) and overlap the first electrode lead 125a and the second electrode lead 125b so as to face the busbar 135.

The first electrode lead 125a and the second electrode lead 125b may be bent at a predetermined angle so as to overlap the busbar 135. For example, the first electrode lead 125a and the second electrode lead 125b may be bent at approximately 90 degrees. The first electrode lead 125a and the second electrode lead 125b may overlap the busbar 135 in the folded state. Either one of the first electrode lead 125a or the second electrode lead 125b may be in contact with the busbar 135.

The electrode lead bending operation (S120) may bend the first electrode lead 125a and the second electrode lead 125b in the second direction (e.g., X direction) to overlap each other.

Referring to FIG. 7, the first welding operation (S130) may be configured to form a first weld W1 by welding a first electrode lead 125a, a second electrode lead 125b, and a busbar 135.

The first weld W1 may include a first weld line W11 and a second weld line W12. The first welding operation (S130) may form a first weld line W11 and a second weld line W12 that are spaced apart from each other in a third direction (e.g., Z direction) parallel to the direction in which the through-hole 132 extends.

The first welding operation (S130) welds a busbar 135, a first electrode lead 125a, and a second electrode lead 125b, and the first weld W1 may form a three-piece welding area. For example, the first electrode lead 125a and the second electrode lead 125b may be welded together with the busbar 135.

Referring to FIG. 8 and FIG. 9, the second welding operation (S140) may form the second weld W2 by welding the sensing terminal 140 to at least one of the first electrode lead 125a or the second electrode lead 125b.

The second welding operation (S140) may form the second weld W2 between the first weld line W11 and the second weld line W12. After the first weld W1 is formed, the sensing terminal 140 may be disposed on the electrode lead 125 and the second weld W2 may be formed while making contact between the sensing terminal 140 and one of the first electrode lead 125a and the second electrode lead 125b. The second weld W2 may be located between the first weld line W11 and the second weld line W12.

The second welding operation (S140) welds the busbar 135, the first electrode lead 125a, the second electrode lead 125b, and the sensing terminal 140, and the second weld W2 may include a four-piece welding area. For example, when welding the sensing terminal 140, the first electrode lead 125a, the second electrode lead 125b, and the busbar 135 may be welded together with the sensing terminal 140.

Meanwhile, referring to FIGS. 11 to 13, at least one of the first electrode lead 125a and/or the second electrode lead 125b may include a cut area 125c formed to avoid the second weld W2. The cut area 125c may be formed in the electrode lead 125 disposed on the outside among the first electrode lead 125a and the second electrode lead 125b.

The first weld W1 includes a first weld line W11 and a second weld line W12 that are spaced apart from each other in a third direction (e.g., Z direction) parallel to the direction in which the through-hole 132 extends, and the cut area 125c may be located between the first weld line W11 and the second weld line W12.

In this case, the second welding operation (S140) welds one of the first electrode lead 125a and the second electrode lead 125b, the busbar 135, and the sensing terminal 140, and the second weld W2 may include a three-piece welding area.

When the second weld W2 is formed as a three-piece welding area, the laser output may be reduced during laser welding, so that the welding of the sensing terminal 140 may be performed more smoothly.

As set forth above, in an embodiment, the size or area of a busbar may be reduced.

In an embodiment, venting may be smoothly performed when thermal runaway occurs.

In an embodiment, the internal space of a battery module may be efficiently utilized.

In an embodiment, welding efficiency may be increased, and the welding quality of the portion in which a sensing terminal is welded may be improved.

In an embodiment, a busbar may be stably supported through a support plate.

## Claims

1. A battery module comprising:
a cell assembly including a first battery cell that includes a first electrode lead and a second battery cell that includes a second electrode lead;
a busbar assembly including:
a support plate formed of an insulating material and including a plurality of through-holes through which the first electrode lead and the second electrode lead respectively pass; and
a busbar electrically connected to the first electrode lead and the second electrode lead, wherein the first electrode lead and the second electrode lead are disposed to overlap each other; and
a sensing terminal coupled to at least one of the first electrode lead or the second electrode lead to sense a property associated with the cell assembly,
wherein the first electrode lead and the second electrode lead are welded to each other at a first weld region to establish electrical connection, and
wherein the sensing terminal is welded to at least one of the first electrode lead or the second electrode lead at a second weld region to establish electrical connection.

2. The battery module of claim 1, wherein the first electrode lead and the second electrode lead are overlapped by passing through the plurality of through-holes of the support plate in a first direction and then being bent at a predetermined angle.

3. The battery module of claim 1 or 2, wherein the busbar is in contact with one of the first electrode lead and the second electrode lead in a first direction in which the first electrode lead and the second electrode lead pass through the plurality of through-holes, and
wherein the busbar is disposed between the first and second electrode leads and the support plate.

4. The battery module of any one of claims 1 to 3, wherein, in a second direction in which the first battery cell and the second battery cell are arranged, the support plate includes a first region in which the busbar is disposed between adjacent through-holes and a second region in which the busbar is not disposed between adjacent through-holes.

5. The battery module of any one of claims 1 to 4, wherein the first weld region includes a first weld line and a second weld line spaced apart from each other in a third direction that is parallel to a direction in which the plurality of through-holes extend, and
the second weld region is located between the first weld line and the second weld line.

6. The battery module of any one of claims 1 to 5, wherein the first weld region includes a three-piece welding area that welds the busbar, the first electrode lead, and the second electrode lead together.

7. The battery module of any one of claims 1 to 6, wherein the second weld region includes a four-piece welding area that welds the busbar, the first electrode lead, the second electrode lead, and the sensing terminal together.

8. The battery module of any one of claims 1 to 4, wherein at least one of the first electrode lead or the second electrode lead includes a cut area that is formed to avoid the second weld region.

9. The battery module of claim 8, wherein the first weld region includes a first weld line and a second weld line spaced apart from each other in a third direction that is parallel to a direction in which the plurality of through-holes extend, and
the cut area is located between the first weld line and the second weld line.

10. The battery module of claim 8, wherein the second weld region includes a three-piece welding area that welds one of the first electrode lead and the second electrode lead, the busbar, and the sensing terminal together.

11. The battery module of any one of claims 1 to 10, having one or more of the following characteristics (i) and (ii), respectively alone or in combination:
(i) the first electrode lead is a cathode lead, the second electrode lead is an anode lead, the busbar is in contact with the second electrode lead, and the sensing terminal is in contact with the first electrode lead, and/or.
(ii) the first electrode lead is a cathode lead, the second electrode lead is an anode lead, the busbar is in contact with the first electrode lead, and the sensing terminal is in contact with the second electrode lead.

12. The battery module of any one of claims 1 to 11,
wherein the support plate includes:
a support protrusion disposed on at least a portion of a periphery of the busbar; and
a mounting groove located between adjacent support protrusions, wherein the busbar is mounted on the mounting groove.

13. A method of manufacturing a battery module, comprising:
inserting a first electrode lead of a first battery cell and a second electrode lead of a second battery cell into a through-hole of a support plate;
bending the first electrode lead and the second electrode lead such that the first electrode lead and the second electrode lead overlap each other to face a busbar;
welding the first electrode lead, the second electrode lead, and the busbar to form a first weld region; and
welding a sensing terminal to at least one of the first electrode lead or the second electrode lead to form a second weld region.

14. The method of claim 13, wherein inserting the first electrode lead and the second electrode lead into the through-hole of the support plate includes passing the first electrode lead and the second electrode lead through the through-hole in a first direction, and
wherein bending the first electrode lead and the second electrode lead includes bending the first electrode lead and the second electrode lead in a second direction such that the first electrode lead and the second electrode lead overlap each other.

15. The method of claim 13 or 14, having one or more of the following characteristics (i) to (iv), respectively alone or in combination:
(i) welding the first electrode lead, the second electrode lead, and the busbar to form the first weld region includes forming a first weld line and a second weld line spaced apart from each other in a third direction that is parallel to a direction in which the through-hole extends, and welding the sensing terminal to at least one of the first electrode lead or the second electrode lead to form the second weld region includes forming a second weld region between the first weld line and the second weld line,
(ii) welding the first electrode lead, the second electrode lead, and the busbar to form the first weld region includes forming a three-piece welding area as the first weld region,
(iii) welding the sensing terminal to at least one of the first electrode lead or the second electrode lead to form the second weld region includes forming a four-piece welding area as the second weld region, and/or
(iv) at least one of the first electrode lead or the second electrode lead includes a cut area formed to avoid the second weld region, and welding the sensing terminal to at least one of the first electrode lead or the second electrode lead to form the second weld region includes forming a three-piece welding area as the second weld region.
